# EUROPÄISCHE PATENTSCHRIFT

(11) **EP 4 562 702 B1**
(45) Veröffentlichungstag und Bekanntmachung des Hinweises auf die Patenterteilung: **24.12.2025**
(21) Anmeldenummer: 24733067.3
(22) Anmeldetag: 23.05.2024
(51) Int. Cl.: H01M 8/2432, H01M 8/2484, H01M 8/2485, H01M 8/04082, H01M 8/12

(54) **GASLEITUNGSVORRICHTUNG FÜR HOCHTEMPERATUR-BRENNSTOFFZELLEN**
GAS CONDUIT DEVICE FOR HIGH-TEMPERATURE FUEL CELLS
DISPOSITIF DE CONDUITE DE GAZ POUR PILES À COMBUSTIBLE À HAUTE TEMPÉRATURE

(30) Priorität: 24.05.2023 AT 504062023
(43) Veröffentlichungstag der Anmeldung: 04.06.2025
(73) Patentinhaber: AVL List GmbH, 8020 Steiermark Graz (AT)
(72) Erfinder: SCHLUCKNER, Christoph, 8042 Graz (AT); PLANITZER, Stefan, 8130 Frohnleiten (AT); KOMETTER, Bernhard, 8111 Judendorf-Straßengel (AT); TIMM, Jens, 8020 Graz (AT); NEUBAUER, Raphael, 8042 Graz (AT)
(86) Internationale Anmeldenummer: PCT/AT2024/060210
(87) Internationale Veröffentlichungsnummer: WO 2024/239034

(56) Entgegenhaltungen:
- CN-A- 114 256 481
- US-A1- 2012 040 267
- US-A1- 2014 147 766
- US-A1- 2015 357 669

## Beschreibung

Die vorliegende Erfindung betrifft eine Gasleitungsvorrichtung zur Durchleitung eines Gases mit hoher Temperatur zwischen wenigstens zwei Brennstoffzellenstapeln, sowie eine Gasleitungsanordnung und ein Hochtemperatur-Brennstoffzellensystem mit derselben.

Die erfindungsgemäße Gasleitungsvorrichtung findet Anwendung im Anlagenbau für regenerative Energieerzeugung mit Festoxidbrennstoffzellen (SOFC) oder der Wasserstoffgewinnung mit Festoxidelektroysezellen (SOEC), die auf hohen Temperaturen zwischen 500 °C und 1000 °C betrieben werden. Die hohen Betriebstemperaturen und Temperaturschwankungen bei einem Herunterfahren und Hochfahren im Falle eines Stillstands des Betriebs stellen demnach besondere Anforderungen an die Anlagentechnik.

Es ist eine Anlagentechnik für ein Festoxidbrennstoffzellensystem (SOFC System) bekannt, bei dem die Brennstoffzellenstapel durch eine elektrisch isolierende Beschichtung von Stapelkomponenten oder einem umgebenden Gehäuse gegenüber einer Peripherie einer Anlagentechnik des Systems isoliert werden. Aufgrund technischer Grenzen der Beschichtungstechnik bzw. der Schichtdicke, ist auch eine maximale erzielbare Isolationseigenschaft dieser Konstruktion begrenzt.

In einem herkömmlichen Aufbau eines SOFC Systems werden die Brennstoffzellenstapel i.d.R. seriell elektrisch verschaltet und miteinander betrieben. Obwohl die Isolationseigenschaft einer Isolationsbeschichtung begrenzt ist, reicht diese in einem genannten herkömmlichen Systemaufbau mit serieller Verschaltung der Brennstoffzellenstapel üblicherweise aus, da sie lediglich dem maximalen Potentialunterschied zwischen den Stapelenden oder einer Ausgangsspannung eines Brennstoffzellenstapels widerstehen muss.

Gasleitungsvorrichtung zur Durchleitung eines Gases mit hoher Temperatur zwischen wenigstens zwei Brennstoffzellenstapeln sind beispielsweise aus der US 2014/147766 A1 und der US 2015/357669 A1 bekannt.

Es ist eine Aufgabe der Erfindung eine geeignete Technik für den Anlagenbau für Hochtemperatur-Brennstoffzellen zu schaffen, die eine verbesserte bzw. alternative elektrische Isolation in einer Anordnung von Brennstoffzellenstapeln, insbesondere in Bezug auf eine verbindende Anlagentechnik zwischen den einzelnen Brennstoffzellenstapeln der Anordnung bereitstellt.

Es ist eine weitere Aufgabe der Erfindung eine geeignete Technik für den Anlagenbau für Hochtemperatur-Brennstoffzellen in Bezug auf eine verbindende Anlagentechnik zwischen einzelnen Brennstoffzellenstapeln eines Systems zu schaffen, die eine alternative elektrische Verschaltung und/oder eine alternative elektrisch verschaltete Anordnung der Brennstoffzellenstapel ermöglicht.

Die voranstehenden Aufgaben werden gelöst durch eine Gasleitungsvorrichtung mit den Merkmalen des Anspruchs 1. Darauf aufbauende, weiterführende technische Lösungen basieren auf einer Gasleitungsanordnung oder einem Hochtemperatur-Brennstoffzellensystem nach den Ansprüchen 10 oder 12, welche die Merkmale der Gasleitungsvorrichtung umfassen und von deren Vorteilen profitieren. Weitere Merkmale und Details der Erfindung ergeben sich aus den Unteransprüchen, der Beschreibung und den Zeichnungen.

Die erfindungsgemäße Gasleitungsvorrichtung dient zur Durchleitung eines Hochtemperatur-Gases von Hochtemperatur-Brennstoffzellen und weist einen Leitungskörper und einen Durchgangskanal, der sich durch den Leitungskörper hindurch erstreckt, zum Leiten einer Strömung des Hochtemperatur-Gases entlang einer axialen Richtung auf.

Erfindungsgemäß ist der Leitungskörper aus einem keramischen Werkstoff gefertigt, für eine elektrische Isolation von elektrischen Potentialen an axialen Enden des Leitungskörpers.

Die Erfindung sieht somit erstmals einen elektrisch isolierenden Körper als Zwischenstück in einer hochtemperaturbeständigen Gasleitung für Brennstoffzellen oder Elektrolyseure mit hoher Betriebstemperatur wie insbesondere in einem SOFC System oder SOEC System vor.

Um den hohen Betriebstemperaturen der Gase Rechnung zu tragen, sieht die Erfindung ferner erstmals einen keramischen Körper als Zwischenstück in einer Gasleitung vor, die üblicherweise vorwiegend aus hochtemperaturbeständigen Stählen gefertigt wird.

Als ein Vorteil der Erfindung wird durch den hochtemperaturbeständigen, keramischen Leitungskörper der erfindungsgemäßen Gasleitungsvorrichtung eine elektrische Leitfähigkeit entlang einer Gasleitungsstrecke, die auf einer elektrischen Leitfähigkeit von metallischen Werkstoffen von Leitungsabschnitten basiert, wirksam unterbrochen. Dadurch werden mögliche Kurzschlussströme oder parasitäre Ströme über Rohrleitungen zwischen Brennstoffzellen in beliebiger Anordnung und Verschaltung unterbunden.

Da die Isolation des keramischen Leitungsköpers der erfindungsgemäßen Gasleitungsvorrichtung in einer vorwiegend aus Stahl gefertigten Peripherie einer Anlagentechnik zur Medienführung angeordnet ist, besteht ein weiterer Vorteil der Erfindung in einer nunmehr grundsätzlichen Ermöglichung einer seriellen Verschaltung von Hochtemperatur-Brennstoffzellenstapeln, die mit Gasströmen versorgt werden müssen.

Als ein weiterer Vorteil der Erfindung, wird durch die Materialstärke des keramischen Leitungsköpers der erfindungsgemäßen Gasleitungsvorrichtung im Vergleich zu einer herkömmlichen Isolationsbeschichtung einer Umgebung oder Außenfläche eines Brennstoffzellenstapels eine erheblich höhere Isolationseigenschaft erzielt.

Gemäß einem vorteilhaften Aspekt der Erfindung kann der keramische Werkstoff, aus dem der Leitungskörper gefertigt ist, ein metallisierbares Aluminiumoxid sein, wobei vorzugsweise der Leitungskörper an axial voneinander getrennten Oberflächenabschnitten eine Metallisierung aufweist, als Basis für eine stoffschlüssige Verbindungstechnik. Somit wird trotz des keramischen Werkstoffes eine wirksame Verbindung zu einem metallischen Bauteil mittels eines Hartlötens ermöglicht. Da die metallisierten Flächen getrennt sind, besteht keine axiale Leitfähigkeit über die Metallisierung des Leitungskörpers. Der keramische Werkstoff, aus dem der Leitungskörper gefertigt ist, ist besonders bevorzugt Al₂O₃.

Gemäß einem vorteilhaften Aspekt der Erfindung kann die Gasleitungsvorrichtung Anschlussabschnitte aufweisen, die zu den axialen Enden des Leitungskörpers angeordnet sind, mit einer Leitungsanschlussfläche, die den Durchgangskanal zu den axialen Enden der Gasleitungsvorrichtung hin umschließen. Somit wird eine verbesserte Anschlussverbindung zu einem Rohrkörper eines angrenzenden Leitungsabschnitts bereitgestellt.

Gemäß einem vorteilhaften Aspekt der Erfindung können die Anschlussabschnitte aus einem metallischen Werkstoff, insbesondere aus einem hochtemperaturbeständigen Stahl, vorzugsweise aus einer austenitischen Chrom-Nickel Stahllegierung, die insbesondere eine hohe Temperaturbeständigkeit von mehr als 1000 °C, vorzugsweise bis 1100 °C aufweisen oder aus Ni200 gefertigt sein. Die Anschlussabschnitte, welche bevorzugt aus Ni200 gefertigt sind, sind bevorzugt direkt mit dem Leitungskörper verbunden sind. Der Leitungskörper ist hierbei insbesondere aus Al₂O₃ gebildet. Diese beiden Materialien (Ni200 und Al₂O₃) haben einen ähnlichen Ausdehnungskoeffizienten, sodass kein weiteres Verbindungsmittel notwendig zu sein scheint.

Gemäß der Erfindung weißt die Gasleitungsvorrichtung ferner Verbindungsmittel auf, die jeweils einerseits über eine sich mit dem Leitungskörper axial überschneidende Erstreckung mit dem Leitungskörper in Verbindung stehen und andererseits über eine sich mit einem der Anschlussabschnitte axial überschneidende Erstreckung mit dem Anschlussabschnitt in Verbindung stehen, für eine Befestigung und/oder eine Abdichtung zwischen dem Leitungskörper und den Anschlussabschnitten. Die axialen Überschneidungen ermöglichen einen Ausgleich zwischen den unterschiedlichen Wärmeausdehnungen einer Keramik des Leitungskörpers und verschiedenen Metallen des Verbindungsmittels und der Anschlussabschnitte.

Vorgesehen ist es, dass die Verbindungsmittel und die Anschlussabschnitte aus demselben metallischen Werkstoff gefertigt sind, besonders bevorzugt aus Ni200. Bei Ni200 handelt es sich um einen unlegierten Nickel mit einem Nickelgehalt von zumindest 99,2 %, weshalb Ni200 ein Reinmetall und keine Legierung ist. Sind die Anschlussabschnitte und die Verbindungsmittel aus demselben Material gefertigt, so bilden diese folglich auch ein einziges, gemeinsames Element. Dies kann gemäß der Erfindung mit Vorteil auch so interpretiert werden, dass kein Verbindungsmittel mehr notwendig ist, sondern die Anschlussabschnitte ausreichen und diese dann bevorzugt direkt mit dem Leitungskörper verbunden sind. Der Leitungskörper ist hierbei insbesondere aus Al₂O₃ gebildet. Durch diese Ausbildung der Verbindungs- bzw. Anschlussabschnitt und des Leitungskörpers sind die Nachteile einer Wärmeausdehnung weiter vermindert.

Gemäß einem vorteilhaften Aspekt der Erfindung können die Verbindungsmittel aus einem metallischen Werkstoff gefertigt sein, vorzugsweise aus einer Nickel-Eisen-Kobalt Legierung, mit einem geringen Ausdehnungskoeffizienten von weniger als 7,0 x 10⁻⁶ 1/K oder aus Ni200 gefertigt sein. Die geringe thermische Ausdehnung der Nickel-Eisen-Kobalt Legierung verschafft den Vorteil, an einer Verbindungstelle einem keramischen Werkstoff, Materialspannungen infolge unterschiedlicher thermischer Ausdehnungen zwischen den Bauteilen möglichst gering zu halten. Wenn die Verbindungsmittel im Gegensatz dazu aus Ni200 gebildet sind, ist es möglich, dass diese einteilig mit den ebenso aus Ni200 gebildeten Anschlussabschnitten ausgebildet werden.

Gemäß einem vorteilhaften Aspekt der Erfindung kann das Verbindungsmittel ringförmig ausgebildet sein und jeweils einen Umfang des Leitungskörpers und/oder einen Umfang von einem der Anschlussabschnitte umschließen, für eine radiale kraftschlüssige und/oder formschlüssige Verbindung zwischen dem Verbindungsmittel und dem Leitungskörper und/oder zwischen dem Verbindungsmittel und den Anschlussabschnitten. Somit wird durch die Verbindungsmittel eine mechanische Befestigung an den Bauteilgrenzen erzielt.

Gemäß einem vorteilhaften Aspekt der Erfindung kann der Leitungskörper an Umfangsflächenabschnitten eine in den keramischen Werkstoff eingebrachte Metallisierung umfassen, und das Verbindungsmittel und/oder der Anschlussabschnitt durch ein Lotmittel mit der metallisierten Umfangsfläche verbunden sein, für eine stoffschlüssige Verbindung zwischen dem Verbindungsmittel und/oder der Anschlussabschnitt und dem Leitungskörper. Somit wird durch die Verbindungsmittel neben einer zusätzlichen Befestigung auch eine Abdichtung der Gasleitungsvorrichtung unter den vorliegenden Betriebsdrücken verbessert. Das Lotmittel ist bevorzugt aus Gold gebildet, sodass dieses nicht korrodiert. Sind das Verbindungsmittel und der Anschlussabschnitt aus demselben Material und somit einteilig ausgebildet, sind folglich beide mit dem Lotmittel mit der metallischen Umfangsfläche verbunden, wobei das Lotmittel hier bevorzugt aus Gold gebildet ist.

Nachdem die Gasleitungsvorrichtung die kleinste handhabbare und handelbare und demnach unter Schutz zustellende Einheit der Erfindung bildet, stellen nachfolgend eine Gasleitungsanordnung und ein später beschriebener Systemaufbau weitere technische Zusammenhänge der Erfindung dar, die von den zuvor erläuterten Vorteilen der Gasleitungsvorrichtung profitieren.

Gemäß einem weiterführenden Aspekt der Erfindung kann eine Gasleitungsanordnung zum Leiten eines Hochtemperatur-Gases von Hochtemperatur-Brennstoffzellen, mit wenigstens einer erfindungsgemäßen Gasleitungsvorrichtung ausgestattet sein. Zudem weist die Gasleitungsanordnung rohrförmig ausgebildete Leitungsabschnitte zum axialen Leiten einer Strömung des Gases entlang der Gasleitungsanordnung auf; wobei die wenigstens eine Gasleitungsvorrichtung zwischen zwei der Leitungsabschnitte angeordnet ist, für eine Unterbrechung einer elektrischen Leitfähigkeit entlang der Gasleitungsanordnung.

Gemäß einem vorteilhaften Aspekt der Erfindung kann die Gasleitungsanordnung Kompensationsabschnitte aufweisen, mit einem rohrförmigen Mantelkörper, der eine axial flexibel ausgebildete Kontur aufweist, für eine Kompensation von axial wirkenden Kräften und/oder Winkelversätzen in der Gasleitungsanordnung infolge von unterschiedlichen thermischen Ausdehnungen der Leitungsabschnitte und der Gasleitungsvorrichtung. Somit wird eine Lebensdauer der Gasleitungsvorrichtung, insbesondere des keramischen Leitungskörpers verlängert.

Gemäß einem weiterführenden Aspekt der Erfindung kann ein Hochtemperatur-Brennstoffzellensystem mehrere Brennstoffzellenstapel aufweisen, und wenigstens eine Gasleitungsanordnung zum Leiten eines Anodenzufuhrgases und/oder ein Anodenabfuhrgases, sowie wenigstens eine erfindungsgemäße Gasleitungsvorrichtung. Dabei umfasst die Gasleitungsanordnung zwischen wenigstens zwei der Brennstoffzellenstapel die wenigstens eine Gasleitungsvorrichtung.

Gemäß einem vorteilhaften Aspekt der Erfindung kann die wenigstens eine Gasleitungsanordnung Abzweigungen für eine parallele Zufuhr oder Abfuhr des Hochtemperatur-Gases an den Brennstoffzellenstapeln verbinden; und die Gasleitungsanordnung kann zwischen jeder der Abzweigungen die Gasleitungsvorrichtung aufweisen.

Gemäß einem vorteilhaften Aspekt der Erfindung können wenigstens zwei der Brennstoffzellenstapel in einer Stapelrichtung der Brennstoffzellen übereinander angeordnet sein, und die wenigstens eine Gasleitungsanordnung kann im Wesentlichen parallel zu der Stapelrichtung an den Brennstoffzellenstapeln vorbeiführen.

Gemäß einem vorteilhaften Aspekt der Erfindung können mehrere der Brennstoffzellenstapel in einer Stapelrichtung der Brennstoffzellen in Form eines Turmes übereinander gestapelt sein und die Enden der Brennstoffzellenstapel seriell verschaltet miteinander elektrisch verbunden sein; wobei in der wenigstens einen Gasleitungsanordnung zwischen jeder Abzweigung der Gasleitungsanordnung zu einem der Brennstoffzellenstapel eine der Gasleitungsvorrichtungen angeordnet ist, für eine Isolation der Gasleitungsanordnung zwischen unterschiedlichen Potentialen der seriell verschalteten, übereinandergestapelten Brennstoffzellenstapel entlang der Stapelrichtung.

Gemäß einem vorteilhaften Aspekt der Erfindung können die Abzweigungen für eine parallele Zufuhr oder Abfuhr des Hochtemperatur-Gases an den Brennstoffzellenstapeln in Endplatten der Brennstoffzellenstapel integriert ausgebildet sein; wobei sich die Endplatten durch einen Querschnitt der wenigstens einen Gasleitungsanordnung erstrecken, für eine Verbindung der integral ausgebildeten Abzweigungen mit der Gasleitungsanordnung. Demnach wird eine raumsparende Ausgestaltung der Brennstoffzellenstapel und deren Leitungen geschaffen, die eine dichtere Anordnung mehrerer derartiger Türme von Brennstoffzellenstapel in der Fläche eines SOFC-Systems erlaubt.

Weitere Vorteile, Merkmale und Einzelheiten der Erfindung ergeben sich aus der nachfolgenden Beschreibung, in der unter Bezugnahme auf die Zeichnung ein Aus-führungsbeispiel im Einzelnen beschrieben ist. Es zeigen schematisch:
- Fig. 1: zeigt eine perspektivische Ansicht einer Ausführungsform der Gasleitungsvorrichtung;
- Fig. 2: zeigt einen axialen Längsschnitt durch dieselbe Ausführungsform der Gasleitungsvorrichtung; und
- Fig. 3: zeigt eine Ansicht eines Hochtemperatur-Brennstoffzellensystems mit einer vergrößerten Ansicht einer Gasleitungsanordnung, an denen die Gasleitungsvorrichtung als Bestandteil eingesetzt wird.

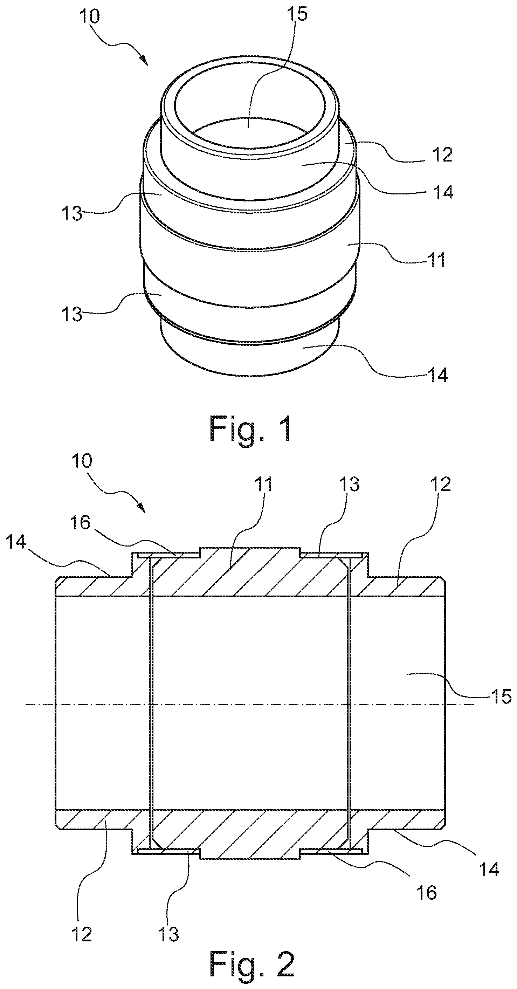

Fig. 1 zeigt eine Ausführungsform der Gasleitungsvorrichtung 10 die mehrere Bauteile umfasst, wobei die perspektivische Ansicht die Gasleitungsvorrichtung 10 in einen zusammengesetzten Zustand im Sinne einer Baugruppe gemäß der Ausführungsform zeigt.

Wie in Fig. 2 in einem Längsschnitt durch die Gasleitungsvorrichtung 10 gezeigt ist, umfasst die zugrundeliegende Baugruppe der dargestellten Ausführungsform im Einzelnen einen zylindrischen Leitungskörper 11 mit einem darin ausgebildeten, zylindrischen Durchgangskanal 15 sowie zwei daran angrenzende flanschförmige Anschlussabschnitte 12 und zwei ringförmige Verbindungsmittel 13, die den Leitungskörper 11 und die Anschlussabschnitte 12 umgreifen. Gemäß der Erfindung können die Anschlussabschnitte 12 und die Verbindungsmittel 13 auch vorteilhaft als ein gemeinsames Element, welches aus demselben Material gefertigt ist, ausgebildet sein. Dabei grenzt der Durchgangskanal 15 dann an das gemeinsame Element aus Anschlussabschnitten 12 und Verbindungsmittel 13. Günstig ist es auch, wenn das Verbindungsmittel 13 weggelassen wird und die Anschlussabschnitte aus Ni200 gebildet sind.

Der Leitungskörper 11 stellt als Bestandteil einer möglichen, auf eine geringste Anzahl an Bauteilen reduzierten Ausführungsform der Gasleitungsvorrichtung 10, ein Hauptbauteil dar. Der Leitungskörper 11 ist vorzugsweise in einer rotationssymmetrischen Form mit einem konstanten Innendurchmesser für den Durchgangskanal 15 ausgebildet. Eine äußere Mantelfläche ist vorzugsweise abgestuft zur Ausbildung von zwei voneinander getrennten Umfangsflächenabschnitten 16 zu den axialen Enden des Leitungskörpers 11, die zur Aufnahme und als Kontaktfläche für die ringförmigen Verbindungsmittel 13 dienen. Da der Leitungskörper 11 aus einem keramischen Werkstoff gefertigt ist, ist dieser praktisch nicht elektrisch leitend und stellt eine Isolation zwischen angrenzenden Leitungsabschnitten einer Gasleitung bereit.

Der keramische Werkstoff ist ein Aluminiumoxid mit der Normbezeichnung AK97M besteht, das sich neben einem hohen elektrischen Widerstand auch durch eine gute Metallisierbarkeit auszeichnet, wodurch der Werkstoff im metallisierten Zustand einer Oberfläche, die Herstellung einer hartgelöteten Verbindung zu anderen Bauteilen aus einem metallischen Werkstoff ermöglicht.

Basierend auf dieser Eigenschaft, ist an den Umfangsflächenabschnitten 16 des Leitungskörpers 11 eine Metallisierung in einer vorbestimmten Oberflächentiefe in das Aluminiumoxid eingebracht. Da ein axial mittlerer Teil des Leitungskörpers 11 keine Metallisierung aufweist, bleibt die axiale Isolationseigenschaft erhalten.

Die Anschlussabschnitte 12 grenzen mit einer flanschförmigen Stirnfläche an eine Stirnfläche der axialen Enden des Leitungskörpers 11 an. Ein Innendurchmesser der vorzugsweise rotationssymmetrischen Anschlussabschnitte 12 entspricht dem Durchgangskanal 15 für eine homogene Fortführung desselben. Eine abgestufte äußere Mantelfläche weist axial nach außen eine Anschlussfläche 14 mit verringertem Durchmesser auf. Durch diese optionale Formgebung ermöglicht die Anschlussfläche 14 beispielsweise eine Steckpassung oder Presspassung in Verbindung mit einem angrenzenden Leitungsrohr. Auf einer axial gegenüberliegenden Seite weist ein Teil der abgestuften äußeren Mantelfläche mit größerem Radius, zumindest abschnittsweise bis zu einem axialen Anschlag, den gleichen Umfang wie die benachbarten Umfangsflächenabschnitten 16 des Leitungskörpers 11 auf, zur Aufnahme und als Kontaktfläche für die ringförmigen Verbindungsmittel 13.

Der metallische Werkstoff des Anschlussabschnitts 12 ist eine austenitische Chrom-Nickel Stahllegierung mit der Normbezeichnung X15CrNiSi25-21 oder der Werkstoffnummer 1.4841. Die Legierung zeichnet sich durch seine Korrosionsbeständigkeit und Temperaturbeständigkeit bis ca. 1.150 °C aus und ist somit für den Anlagenbau eines SOFC-Systems besonders eignet. Vorzugsweise sind auch weitere, Komponenten der Gasleitungsanordnung, wie die Leitungsabschnitte und die Kompensationsabschnitte aus derselben Stahllegierung gefertigt.

Der metallische Werkstoff des Verbindungsmittels 13 ist eine Nickel-Eisen-Kobalt Legierung mit der Normbezeichnung NiCo29-18 oder der Werkstoffnummer 1.3981. Die Legierung zeichnet sich durch einen sehr niedrigen thermischen Ausdehnungskoeffizienten von, je nach Temperaturbereich, etwa 5,0 - 6,5 x 10⁻⁶ 1/K aus, der eine gute Annährung an den geringen Ausdehnungskoeffizienten des keramischen und ggf. metallisierten Werkstoff des Leitungskörpers 11 ermöglicht.

Die Baugruppe der Gasleitungsvorrichtung 10 weist in der beschriebenen Ausführungsform nicht nur eine kraftschlüssige oder formschlüssige Verbindung mittels einer Passung zwischen dem Verbindungsmittel 13 dem Leitungskörper 11 und den Anschlussabschnitten 12 auf, sondern auf jeweils eine stoffschlüssige Verbindung. So ist an einer Oberfläche der Umfangsflächenabschnitte 16 des Leitungskörpers 11 eine Metallisierung in die Keramik bzw. das Aluminiumoxid eingebracht. Zwischen den metallisierten Umfangsflächenabschnitten 16 und den ringförmigen Verbindungsmittel 13 aus der Metalllegierung ist zur zusätzlichen Befestigung und Abdichtung eine Lötverbindung aus einem Hartlot aufgebracht (nicht weiter dargestellt). Zwischen den ringförmigen Verbindungsmitteln 13 aus der Metalllegierung und den Anschlussabschnitten 12 aus der Stahllegierung ist zur zusätzlichen Befestigung und Abdichtung entweder ebenfalls eine Lötverbindung oder eine Schweißverbindung aufgebracht (nicht weiter dargestellt).

Somit stellen die Verbindungsmittel 13 in der beschriebenen Ausführungsform sowohl eine mechanische Befestigung als auch eine Abdichtung zwischen dem Leitungskörper 11 und den Anschlussabschnitten 12 her. **In** alternativen Ausführungsformen können die Verbindungsmittel 13 auch lediglich eine der beiden Eigenschaften erfüllen, während die andere Eigenschaft durch zusätzliche Befestigungsmittel oder Dichtungsmittel erfüllt wird.

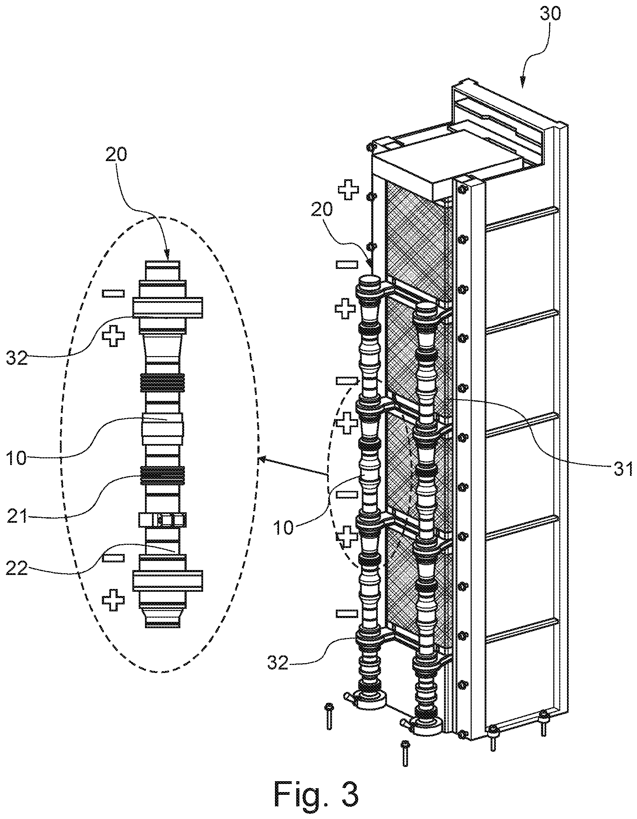

Fig. 3 zeigt auf einer rechten Seite eine Darstellung eines SOFC Systems, d.h. eines Hochtemperatur-Brennstoffzellensystem 30, in dem die Brennstoffzellenstapel 31 ebenso wie die Brennstoffzellen innerhalb der Brennstoffzellenstapel 31 in der gleichen Stapelrichtung in Form eines Turmes übereinander gestapelt sind und seriell verschaltet miteinander elektrisch verbunden sind. Parallel dazu führen zwei Gasleitungsanordnungen 20 parallel zu der Stapelrichtung an den Brennstoffzellenstapeln 31 vorbei.

Eine der beiden Gasleitungsanordnungen 20 führt ein auf hohe Temperaturen vorgewärmtes Anodenzufuhrgas parallel an allen Brennstoffzellenstapeln 31 zu. Die andere der beiden Gasleitungsanordnungen 20 führt ein Anodenabfuhrgas mit hoher Reaktionstemperatur parallel an allen Brennstoffzellenstapeln 31 ab. Dabei ist an jedem Brennstoffzellenstapel 31 eine Endplatte 32 als Medienverteilerplatte ausgebildet, in der Kanäle als Abzweigung des Anodenzufuhrgases aus der einen Gasleitungsanordnung 20 und Kanäle als Abzweigung des Anodenabfuhrgases in die andere Gasleitungsanordnung 20 integral ausgebildet. Die Endplatten 32 erstrecken sich in den Querschnitt der Gasleitungsanordnungen 20 hinein, um eine abzweigende Verbindung eines internen Kanals der Endplatten 32 zu dem Gasstrom in den Gasleitungsanordnungen 20 herzustellen. Aufgrund der metallischen Werkstoffe der Endplatten 32 der Brennstoffzellenstapel 31 und den Komponenten der Gasleitungsanordnung 20 würde sich ohne eine elektrische Isolation in der beschriebenen Ausführungsform des Systemaufbaus ein Kurzschlussstrom über die Gasleitungsanordnungen 20 ausbreiten, aufgrund der unterschiedlichen Potentiale der seriell verschalteten Brennstoffzellenstapel 31 entlang der gesamten Stapelrichtung der turmförmigen Anordnung. Aufgrund einer Vielzahl der elektrisch isolierenden Gasleitungsvorrichtungen 10, die entlang der Gasleitungsanordnungen 20 zwischen jeder Verzweigung des Gasstroms zu jedem Brennstoffzellenstapel 31, d.h. zwischen jeder Schnittstelle mit einer medienführenden Endplatten 32 angeordnet sind, wird jedoch eine vollständige elektrische Trennung der Peripherie zwischen den seriell verschalteten Brennstoffzellenstapeln 31 erlangt.

Wie auf einer linken Seite der Fig. 3 dargestellt ist, umfasst die Gasleitungsanordnungen 20 in Kombination mit der Gasleitungsvorrichtungen 10 vorzugsweise noch weitere Komponenten. So sind zusätzlich zu Leitungsabschnitten 22, die eine angrenzende Leitungsstrecke zu den Gasleitungsvorrichtungen 10 und den medienführenden Endplatten 32 bilden, auch Kompensationsabschnitte 21 dazwischen angeordnet. Die Kompensationsabschnitte 21 weisen eine axial flexible Mantelfläche, beispielsweise in Form eines Faltenbalgs auf, und gleichen auftretende Kräfte aus Materialspannungen aufgrund unterschiedlicher thermischer Ausdehnungsverhalten von Werkstoffen der Bauteile auf. Somit verhindern die Kompensationsabschnitte 21 insbesondere, dass der keramische Werkstoff des Leitungsabschnittes 11 mit einer vergleichsweise spröden Materialeigenschaft, schädlichen axialen Kräften und/oder Winkelversätzen infolge einer Ausdehnung der Leitungsabschnitte 22 aus einer Stahllegierung mit wesentlich stärkerer thermischer Ausdehnung ausgesetzt wird.

### Bezugszeichenliste

- 10: Gasleitungsvorrichtung
- 11: Leitungskörper
- 12: Anschlussabschnitt
- 13: Verbindungsmittel
- 14: Anschlussfläche
- 15: Durchgangskanal
- 16: metallisierter Umfangsflächenabschnitt
- 20: Gasleitungsanordnung
- 21: Kompensationsabschnitt
- 22: Leitungsabschnitt
- 30: Hochtemperatur-Brennstoffzellensystem
- 31: Brennstoffzellenstapel
- 32: Endplatte von Brennstoffzellenstapel

## Patentansprüche

1. Gasleitungsvorrichtung (10) zur Durchleitung eines Hochtemperatur-Gases von Hochtemperatur-Brennstoffzellen, aufweisend:
einen Leitungskörper (11) und einen Durchgangskanal (15), der sich durch den Leitungskörper (11) hindurch erstreckt, zum Leiten einer Strömung des Hochtemperatur-Gases entlang einer axialen Richtung, wobei der Leitungskörper (11) aus einem keramischen Werkstoff gefertigt ist, für eine elektrische Isolation von elektrischen Potentialen an axialen Enden des Leitungskörpers (11), wobei ferner Verbindungsmittel (13) vorgesehen sind, die jeweils einerseits über eine sich mit dem Leitungskörper (11) axial überschneidende Erstreckung mit dem Leitungskörper (11) in Verbindung stehen und andererseits über eine sich mit einem der Anschlussabschnitte (12) axial überschneidende Erstreckung mit dem Anschlussabschnitt (12) in Verbindung stehen, für eine Befestigung und/oder eine Abdichtung zwischen dem Leitungskörper (11) und den Anschlussabschnitten (12), **dadurch gekennzeichnet, dass** die Verbindungsmittel (13) und die Anschlussabschnitte (12) aus demselben metallischen Werkstoff gefertigt sind.

2. Gasleitungsvorrichtung (10) nach Anspruch 1, wobei der keramische Werkstoff, aus dem der Leitungskörper (11) gefertigt ist, ein metallisierbares Aluminiumoxid ist.

3. Gasleitungsvorrichtung (10) nach Anspruch 2, wobei der Leitungskörper (11) an axial voneinander getrennten Oberflächenabschnitten eine Metallisierung aufweist, als Basis für eine stoffschlüssige Verbindungstechnik.

4. Gasleitungsvorrichtung (10) nach einem der Ansprüche 1 bis 3, ferner aufweisend Anschlussabschnitte (12), die zu den axialen Enden des Leitungskörpers (11) angeordnet sind, mit einer Anschlussfläche (14), die den Durchgangskanal (15) zu den axialen Enden der Gasleitungsvorrichtung (10) hin umschließen.

5. Gasleitungsvorrichtung (10) nach Anspruch 4, wobei die Anschlussabschnitte (12) aus einem metallischen Werkstoff, vorzugsweise aus einer austenitischen Chrom-Nickel Stahllegierung, die insbesondere eine hohe Temperaturbeständigkeit von mehr als 1000 °C, vorzugsweise bis 1100 °C aufweisen oder aus Ni200 gefertigt sind.

6. Gasleitungsvorrichtung (10) nach einem der Ansprüche 1 bis 5, wobei die Verbindungsmittel (13) und die Anschlussabschnitte (12) aus Ni200 gefertigt sind.

7. Gasleitungsvorrichtung (10) nach einem der Ansprüche 1 bis 6, wobei die die Verbindungsmittel (13) aus einem metallischen Werkstoff, vorzugsweise aus einer Nickel-Eisen-Kobalt Legierung, mit einem geringen Ausdehnungskoeffizienten von weniger als 7,0 x 10⁻⁶ 1/K oder aus Ni200 gefertigt sind.

8. Gasleitungsvorrichtung (10) nach einem der Ansprüche 5 bis 7, wobei die Verbindungsmittel (13) ringförmig ausgebildet sind und jeweils einen Umfang des Leitungskörpers (11) und/oder einen Umfang von einem der Anschlussabschnitte (12) umschließt, für eine radiale kraftschlüssige und/oder formschlüssige Verbindung zwischen dem Verbindungsmittel (13) und dem Leitungskörper (11) und/oder zwischen dem Verbindungsmittel (13) und dem Anschlussabschnitten (12).

9. Gasleitungsvorrichtung (10) nach einem der Ansprüche 1 bis 8, wobei der Leitungskörper (11) an Umfangsflächenabschnitten (16) eine in den keramischen Werkstoff eingebrachte Metallisierung umfasst, und das Verbindungsmittel (13) und/oder der Anschlussabschnitt (12) durch ein Lotmittel mit der metallisierte Umfangsfläche (16) verbunden ist, für eine stoffschlüssige Verbindung zwischen dem Verbindungsmittel (13) und/oder dem Anschlussabschnitt (12) und dem Leitungskörper (11).

10. Gasleitungsanordnung (20) zum Leiten eines Hochtemperatur-Gases von Hochtemperatur-Brennstoffzellen, mit wenigstens einer Gasleitungsvorrichtung (10) nach einem der Ansprüche 1 bis 9, ferner aufweisend:
rohrförmig ausgebildete Leitungsabschnitte (22) zum axialen Leiten einer Strömung des Gases entlang der Gasleitungsanordnung (20); wobei
die wenigstens eine Gasleitungsvorrichtung (10) zwischen zwei der Leitungsabschnitte (22) angeordnet ist, für eine Unterbrechung einer elektrischen Leitfähigkeit entlang der Gasleitungsanordnung (20).

11. Gasleitungsanordnung (20) nach Anspruch 10, ferner aufweisend Kompensationsabschnitte (21) mit einem rohrförmigen Mantelkörper, der eine axial flexibel ausgebildete Kontur aufweist, für eine Kompensation von axial wirkenden Kräften in der Gasleitungsanordnung (20) infolge von unterschiedlichen thermischen Ausdehnungen der Leitungsabschnitte (22) und der Gasleitungsvorrichtung (21).

12. Hochtemperatur-Brennstoffzellensystem (30) mit mehreren Brennstoffzellenstapeln (31), die wenigstens eine Gasleitungsanordnung (20) zum Leiten eines Anodenzufuhrgases und/oder eines Anodenabfuhrgases eines Hochtemperatur-Gases sowie wenigstens eine Gasleitungsvorrichtung (10) nach einem der Ansprüche 1 bis 9 aufweist, wobei
die wenigstens eine Gasleitungsanordnung (20) zwischen wenigstens zwei der Brennstoffzellenstapel (31) die wenigstens eine Gasleitungsvorrichtung (10) aufweist.

13. Hochtemperatur-Brennstoffzellensystem (30) nach Anspruch 12, wobei die wenigstens eine Gasleitungsanordnung (20) Abzweigungen für eine parallele Zufuhr oder Abfuhr des Hochtemperatur-Gases an den Brennstoffzellenstapeln (31) verbindet; und
die Gasleitungsanordnung (20) zwischen jeder der Abzweigungen die Gasleitungsvorrichtung (10) aufweist.

14. Hochtemperatur-Brennstoffzellensystem (30) nach Anspruch 12 oder 13, wobei wenigstens zwei der Brennstoffzellenstapel (31) in einer Stapelrichtung der Brennstoffzellen übereinander angeordnet sind, und
die wenigstens eine Gasleitungsanordnung (20) im Wesentlichen parallel zu der Stapelrichtung an den Brennstoffzellenstapeln (31) vorbeiführt.

15. Hochtemperatur-Brennstoffzellensystem (30) nach einem der Ansprüche 12 bis 14, wobei mehrere der Brennstoffzellenstapel (31), in Form eines Turmes, in einer Stapelrichtung der Brennstoffzellen übereinander gestapelt sind, und die Enden der Brennstoffzellenstapel (31) seriell verschaltet miteinander elektrisch verbunden sind; und
in der wenigstens einen Gasleitungsanordnung (20) zwischen jeder Abzweigung der Gasleitungsanordnung (20) zu einem der Brennstoffzellenstapel (31) eine der Gasleitungsvorrichtungen (10) angeordnet ist, für eine Isolation der Gasleitungsanordnung (20) zwischen unterschiedlichen Potentialen der seriell verschalteten, übereinander gestapelten Brennstoffzellenstapel (31) entlang der Stapelrichtung.

## Claims

1. Gas conduit apparatus (10) for conducting a high-temperature gas from high-temperature fuel cells, comprising:
a conduit body (11) and a passageway (15) extending through the conduit body (11) for conducting a flow of the high-temperature gas along an axial direction, wherein the conduit body (11) is made of a ceramic material, for electrical insulation of electrical potentials at axial ends of the conduit body (11), wherein further connecting means (13) are provided, each of which is connected to the conduit body (11) via an extension axially intersecting the conduit body (11) and, on the other hand, is connected to the connection section (12) via an extension axially intersecting one of the connection sections (12), for fastening and/or sealing between the conduit body (11) and the connecting sections (12), **characterized in that** the connecting means (13) and the connecting sections (12) are made of the same metallic material.

2. Gas conduit apparatus (10) according to claim 1, wherein the ceramic material from which the conduit body (11) is made is a metallizable aluminum oxide.

3. Gas conduit apparatus (10) according to claim 2, wherein the conduit body (11) has a metallization on axially separated surface sections as a basis for a material-to-material connection technique.

4. Gas conduit apparatus (10) according to one of claims 1 to 3, further comprising connecting sections (12) arranged at the axial ends of the conduit body (11), with a connecting surface (14) enclosing the passageway (15) toward the axial ends of the gas conduit apparatus (10).

5. Gas conduit apparatus (10) according to claim 4, wherein the connecting sections (12) are made of a metallic material, preferably of an austenitic chromium-nickel steel alloy, which in particular has a high temperature resistance of more than 1000°C, preferably up to 1100°C, or of Ni200.

6. Gas conduit apparatus (10) according to one of claims 1 to 5, wherein the connecting means (13) and the connecting sections (12) are made of Ni200.

7. Gas conduit apparatus (10) according to one of claims 1 to 6, wherein the connecting means (13) are made of a metallic material, preferably of a nickel-iron-cobalt alloy, with a low expansion coefficient of less than 7.0 x 10'6 1/K or of Ni200.

8. Gas conduit apparatus (10) according to one of claims 5 to 7, wherein the connecting means (13) are annular and each encloses a circumference of the conduit body (11) and/or a circumference of one of the connecting sections (12), for a radial force-locking and/or form-locking connection between the connecting means (13) and the conduit body (11) and/or between the connecting means (13) and the connecting sections (12).

9. Gas conduit apparatus (10) according to one of claims 1 to 8, wherein the conduit body (11) comprises a metallization introduced into the ceramic material on peripheral surface sections (16), and the connecting means (13) and/or the connecting section (12) is connected to the metallized peripheral surface (16) by a solder, for a material connection between the connecting means (13) and/or the connecting section (12) and the conduit body (11).

10. Gas conduit assembly (20) for conducting a high-temperature gas from high-temperature fuel cells, comprising at least one gas conduit apparatus (10) according to one of claims 1 to 9, further comprising: tubular line sections (22) for axially conducting a flow of the gas along the gas conduit assembly (20); wherein the at least one gas conduit apparatus (10) is arranged between two of the line sections (22) for interrupting electrical conductivity along the gas conduit assembly (20).

11. Gas conduit assembly (20) according to claim 10, further comprising compensation sections (21) with a tubular jacket body having an axially flexible contour for compensating axially acting forces in the gas conduit assembly (20) due to different thermal expansions of the line sections (22) and the gas conduit assembly (21).

12. A high-temperature fuel cell system (30) comprising a plurality of fuel cell stacks (31), which comprises at least one gas conduit assembly (20) for conducting an anode supply gas and/or an anode exhaust gas of a high-temperature gas, and at least one gas conduit apparatus (10) according to one of claims 1 to 9, wherein the at least one gas conduit assembly (20) comprises the at least one gas conduit apparatus (10) between at least two of the fuel cell stacks (31).

13. The high-temperature fuel cell system (30) according to claim 12, wherein the at least one gas conduit assembly (20) connects branches for parallel supply or discharge of the high-temperature gas to the fuel cell stacks (31); and the gas conduit assembly (20) comprises the gas conduit apparatus (10) between each of the branches.

14. The high-temperature fuel cell system (30) according to claim 12 or 13, wherein at least two of the fuel cell stacks (31) are arranged one above the other in a stacking direction of the fuel cells, and the at least one gas conduit assembly (20) extends past the fuel cell stacks (31) substantially parallel to the stacking direction.

15. The high-temperature fuel cell system (30) according to any one of claims 12 to 14, wherein a plurality of fuel cell stacks (31) are stacked one above the other in the form of a tower in a stacking direction of the fuel cells, and the ends of the fuel cell stacks (31) are electrically connected to one another in series; and in the at least one gas conduit assembly (20), between each branch of the gas conduit assembly (20) to one of the fuel cell stacks (31), one of the gas conduit apparatus (10) is arranged for isolating the gas conduit assembly (20) between different potentials of the serially connected, stacked fuel cell stacks (31) along the stacking direction.

## Revendications

1. Dispositif de conduite de gaz (10) pour l'acheminement d'un gaz à haute température provenant de piles à combustible haute température, comprenant : un corps de conduite (11) et un passage (15) traversant ce corps (11) pour l'acheminement du gaz à haute température le long d'une direction axiale. Le corps de conduite (11) est en céramique, assurant l'isolation électrique des potentiels électriques à ses extrémités axiales. Des moyens de connexion (13) sont prévus, chacun étant relié au corps de conduite (11) par une extension coupant axialement le corps de conduite (11) et, d'autre part, à la section de connexion (12) par une extension coupant axialement l'une des sections de connexion (12), pour la fixation et/ou l'étanchéité entre le corps de conduite (11) et les sections de connexion (12). Le moyen de connexion (13) et les sections de connexion (12) sont constitués du même matériau métallique.

2. Dispositif de conduit de gaz (10) selon la revendication 1, dans lequel le matériau céramique à partir duquel le corps de conduit (11) est fabriqué est un oxyde d'aluminium métallisable.

3. Dispositif de conduite de gaz (10) selon la revendication 2, dans lequel le corps de conduite (11) présente une métallisation sur des sections de surface séparées axialement comme base pour une technique de connexion matériau à matériau.

4. Dispositif de conduit de gaz (10) selon l'une des revendications 1 à 3, comprenant en outre des sections de raccordement (12) disposées aux extrémités axiales du corps de conduit (11), avec une surface de raccordement (14) entourant le passage (15) vers les extrémités axiales du dispositif de conduit de gaz (10).

5. Dispositif de conduite de gaz (10) selon la revendication 4, dans lequel les sections de raccordement (12) sont réalisées en un matériau métallique, de préférence en un alliage d'acier austénitique au chrome-nickel, qui présente en particulier une résistance à haute température de plus de 1000°C, de préférence jusqu'à 1100°C, ou en Ni200.

6. Dispositif de conduite de gaz (10) selon l'une des revendications 1 à 5, dans lequel les moyens de connexion (13) et les sections de connexion (12) sont réalisés en Ni200.

7. Dispositif de conduite de gaz (10) selon l'une des revendications 1 à 6, dans lequel les moyens de raccordement (13) sont constitués d'un matériau métallique, de préférence d'un alliage nickel-fer-cobalt, présentant un faible coefficient de dilatation inférieur à 7,0 x 10'6 1/K ou de Ni200.

8. Dispositif de conduite de gaz (10) selon l'une des revendications 5 à 7, dans lequel les moyens de raccordement (13) sont annulaires et entourent chacun une circonférence du corps de conduite (11) et/ou une circonférence de l'une des sections de raccordement (12), pour une liaison radiale par force et/ou par forme entre les moyens de raccordement (13) et le corps de conduite (11) et/ou entre les moyens de raccordement (13) et les sections de raccordement (12).

9. Dispositif de conduite de gaz (10) selon l'une des revendications 1 à 8, dans lequel le corps de conduite (11) comprend une métallisation introduite dans le matériau céramique sur des sections de surface périphériques (16), et le moyen de connexion (13) et/ou la section de connexion (12) est connectée à la surface périphérique métallisée (16) par une soudure, pour une liaison matérielle entre le moyen de connexion (13) et/ou la section de connexion (12) et le corps de conduite (11).

10. Ensemble de conduites de gaz (20) pour l'acheminement d'un gaz à haute température provenant de piles à combustible haute température, comprenant au moins un dispositif de conduite de gaz (10) selon l'une des revendications 1 à 9, comprenant en outre : des sections de conduite tubulaires (22) pour conduire axialement un flux de gaz le long de l'ensemble de conduites de gaz (20) ; le ou les dispositifs de conduite de gaz (10) étant disposés entre deux des sections de conduite (22) pour interrompre la conductivité électrique le long de l'ensemble de conduites de gaz (20).

11. Ensemble de conduite de gaz (20) selon la revendication 10, comprenant en outre des sections de compensation (21) avec un corps de gaine tubulaire présentant un contour axialement flexible pour compenser les forces agissant axialement dans l'ensemble de conduite de gaz (20) dues aux différentes dilatations thermiques des sections de conduite (22) et du dispositif de conduite de gaz (21).

12. Système de pile à combustible haute température (30) comprenant plusieurs empilements de piles à combustible (31), comprenant au moins un dispositif de l'ensemble de conduite de gaz (20) pour acheminer un gaz d'alimentation anodique et/ou un gaz d'échappement anodique d'un gaz haute température, et au moins un dispositif de conduite de gaz (10) selon l'une des revendications 1 à 9, dans lequel le ou les dispositifs de l'ensemble de conduite de gaz (20) comprennent le ou les dispositifs de conduite de gaz (10) entre au moins deux des empilements de piles à combustible (31).

13. Système de pile à combustible haute température (30) selon la revendication 12, dans lequel l'au moins un ensemble de l'ensemble de l'ensemble de conduite de gaz (20) relie des branches pour l'alimentation ou l'évacuation parallèles du gaz haute température vers les piles à combustible (31) ; et l'ensemble de l'ensemble de conduite de gaz (20) comprend le dispositif de conduite de gaz (10) entre chacune des branches.

14. Système de pile à combustible haute température (30) selon la revendication 12 ou 13, dans lequel au moins deux des empilements de piles à combustible (31) sont disposés l'un au-dessus de l'autre dans une direction d'empilement des piles à combustible, et le ou les dispositifs de l'ensemble de conduite de gaz (20) s'étendent au-delà des empilements de piles à combustible (31) sensiblement parallèlement à la direction d'empilement.

15. Système de piles à combustible haute température (30) selon l'une quelconque des revendications 12 à 14, dans lequel plusieurs piles à combustible (31) sont empilées les unes sur les autres en forme de tour dans le sens d'empilement des piles, et leurs extrémités sont connectées électriquement en série ; et Dans au moins un dispositif de l'ensemble de conduite de gaz (20), entre chaque branche du dispositif de l'ensemble de conduite de gaz z (20) vers l'une des piles à combustible (31), un dispositif de conduite de gaz (10) est disposé pour isoler le dispositif de l'ensemble de conduite de gaz (20) entre les différents potentiels des piles à combustible (31) empilées en série le long du sens d'empilement.
